# EUROPEAN PATENT SPECIFICATION

(11) **EP 1 982 035 B1**
(45) Date of publication and mention of the grant of the patent: **25.07.2012**
(21) Application number: 07717544.6
(22) Date of filing: 02.02.2007
(51) Int. Cl.: E05F 15/00, E05F 15/10

(54) **MOVABLE PARTITION MONITORING SYSTEM AND METHOD**
SYSTEM UND VERFAHREN ZUR ÜBERWACHUNG EINER BEWEGLICHEN TRENNWAND
SYSTÈME ET PROCÉDÉ DE SURVEILLANCE DE CLOISONS MOBILES

(30) Priority: 02.02.2006 US 346130
(43) Date of publication of application: 22.10.2008
(73) Proprietor: Robert Bosch GmbH, 70442 Stuttgart (DE)
(72) Inventor: AVERITT, Scott, Roseville, MI 48066 (US)
(74) Representative: Knapp, Thomas
(86) International application number: PCT/US2007/061558
(87) International publication number: WO 2007/092783

(56) References cited:
- DE-A1- 10 141 859
- DE-U1- 20 309 093
- FR-A1- 2 871 839

## Description

### BACKGROUND

Many vehicles include movable partitions (e.g., a window, a sunroof, a sliding door, etc.) that are displaced using a partition drive system. For example, a window in a door of a vehicle may be moved up and down using a direct-current ("DC") permanent magnet electric motor. In order to effectively move partitions, drive systems need to produce a significant amount of force. As a result, partition drive systems can produce forces that pose safety hazards. For example, an automatic window closure system could trap a finger or hand. DE 101 41 859 A1 relates to a method and system for detecting the position of a power window of a vehicle.

### SUMMARY

The following summary sets forth certain example embodiments of the invention described in greater detail below. It does not set forth all such embodiments and should in no way be construed as limiting of the invention.

In one embodiment, a system for monitoring a movable partition includes a cable having a first end and a second end. The movable partition is coupled to the first end of the cable. A drive system is also included in the system and can move the movable partition. A drum is coupled to the second end of the cable, and the drum is independent of the drive system. A sensor transmits a signal indicative of the rotational motion of the drum, while a controller receives the transmitted signal and calculates at least one of a speed, acceleration, position, and direction of movement of the movable partition.

In another embodiment, a method of monitoring a movable partition includes providing a rotatable drum configured to be independent of a drive system for the movable partition; linking the rotatable drum and the movable partition via an attachment element; generating a first signal with a sensor, the first signal indicative of rotational motion of the rotatable drum; receiving, by a controller, the first signal; and generating, by the controller, a second signal using data from the first signal, the second signal indicative of at least one of a speed, a position, a direction of travel, and an acceleration of the movable partition.

In another embodiment, a vehicle having a system for monitoring a movable partition includes a movable partition, a drive system, a sensor, and a controller. The drive system moves the movable partition. A sensor, which is mechanically linked to the partition but decoupled from the drive system, transmits a signal indicative of the rotational motion of the drum. The controller receives the transmitted signal and calculates at least one of a speed, acceleration, position, and direction of movement of the movable partition. The controller also generates a signal indicative of an obstruction in a path of the movable partition.

### BRIEF DESCRIPTION OF THE DRAWINGS

Fig. 1 is a block diagram of an exemplary system that includes a movable partition monitoring system.
Fig. 2 illustrates an exemplary system, which includes a vehicle door having a partition and a partition monitoring system.
Fig. 3 illustrates an exemplary system, which includes a slidable door having a partition monitoring system,
Fig. 4 illustrates an exemplary partition monitoring system.
Fig. 5A illustrates an end view of an aperture disc and optical sensor.
Fig. 5B illustrates an end view of a ring magnet and magnetic sensor.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

Embodiments of the invention relate to systems and methods of monitoring motion of a movable partition. In an embodiment, a movable partition monitoring system is provided that is separated or decoupled from a drive system of the movable partition. Providing a monitoring system that is independent of the drive system can produce a more accurate representation of partition motion. For example, embodiments herein can reduce inaccuracies inherent in partition monitoring systems that are incorporated into the partition drive system (e.g., inaccuracies due to drive motor start-up conditions). Additionally, a decoupled monitoring system can be applied to a variety of different partition monitoring applications, without having to be designed and integrated into the drive system for each specific application.

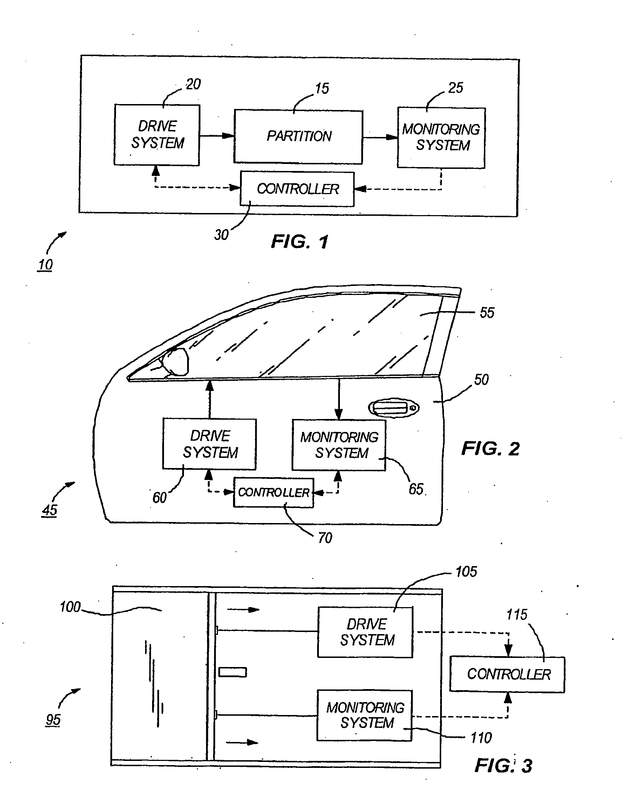

Fig. 1 is a block diagram of a system 10 that generally includes a movable partition 15, a partition drive system 20, and a partition monitoring system 25. The drive system 20 is used to move the partition 15, while the monitoring system 25 tracks or monitors the motion of the partition 15, as described in greater detail below. A controller 30 (described in greater detail below) is also included.

The movable partition 15, most generally, is any movable vehicle partition such as a window, a sunroof, a sliding door, a trunk hatch, and the like. The drive system 20 includes the components that are used to move the partition 15. In one embodiment, the drive system 20 includes a permanent magnet DC motor, a plurality of pulleys and/or gears, and a cable. In other embodiments, the drive system 20 can include a different type of motor, or other mechanical components to aid in moving the partition 15. The monitoring system 25, as described in greater detail below, may also include multiple gears or pulleys and a cable. As shown in Fig. 1, the monitoring system 25 is separated or decoupled from the drive system 20. For example, instead of being directly connected to the drive system 20, the monitoring system 25 is mechanically linked to the partition 15. Thus, in the embodiment shown in Fig. 1, the only mechanical link between the drive system 20 and the monitoring system 25 is whatever indirect link that may exist through the partition 15. For example, although the monitoring system 25 is sensitive to relatively small variations or changes in the status of the partition 15, the monitoring system 25 has relatively little mechanical input to the drive system 20. As a result, the monitoring system 25 monitors the motion of the partition 15 directly (i.e., without using information from components of the drive system 20, such as motor current).

In one embodiment, the controller 30 is a stand-alone processing unit that is in communication with both the drive system 20 and the monitoring system 25. In another embodiment, the controller may comprise circuitry that is integrated directly into components of the drive system 20, the partition monitoring system 25, or a combination thereof. The controller 30 transmits data to, and receives data from, the drive system 20, and receives data from the monitoring system 25. As a result, the controller 30 can control motion of the partition 15 using the drive system 20 (e.g., a motor of the drive system 20), while tracking the speed, position, direction of travel, and/or acceleration of the partition 15 using the monitoring system 25. In some embodiments, such as those described below, the controller 30 uses data from the monitoring system 25 to mitigate potentially hazardous conditions associated with the drive system 20. For example, the controller 30 stops the operation of a motor of the drive system 20 to reduce a potentially hazardous condition. The controller 30 can also use information from the monitoring system 25 to detect failure of drive system components. For example, a motor of the drive system 20 may be designed to run at a certain speed during operation. Motor failure can be potentially detected if the monitoring system 25 sends information indicative of fluctuating motor speed during operation.

Fig. 2 illustrates an exemplary system 45, which includes a partition 55 of a vehicle door 50. The system 45 also includes a drive system 60, a partition monitoring system 65, and a controller 70, which are similar to those shown in Fig. 1.

The window 55 is driven up and down using the drive system 60. In some embodiments, the drive system 60 is regulated by the controller 70, which receives input signals from control buttons (not shown). For example, a user can actuate an "UP" control button positioned on the vehicle door 50 to move the window 55 from an open or lowered position to a closed or raised position. In some embodiments, the user must continually actuate the control button to keep the window 55 in motion. In other embodiments, the drive system 60 and controller 70 are equipped with an "automatic open" or "automatic close" function. As a result, the user can fully open or fully close the window 55 with a single, momentary actuation of a control button.

In the embodiment shown in Fig. 2, the monitoring system 65 is independent of or decoupled from the drive system 60, and is used to monitor the speed, position, direction of travel, and/or acceleration of the window 55. To do so, the monitoring system 65 transmits monitored data to the controller 70 as the window 55 moves from a fully open or lowered position to a fully closed or raised position. The controller 70, upon receiving the data from the monitoring system 65, determines whether to allow the drive system 60 to move the window 55. For example, the controller 70 determines whether to allow a motor (not shown) of the drive system 60 to continue operating, or whether to stop operation of the motor. Methods of determining the speed, position, direction of travel, and/or acceleration of the window 55 using the controller 70 and the monitored data (from the monitoring system 65). are known by those skilled in the art. The controller 70 can prevent the window 55 from closing if the data From the monitoring system 65 indicates the presence of an object in the path of the window 55. Additionally, in one embodiment, the controller 70 can reverse the direction of the motor of the drive system 60 if the monitoring system 65 indicates the presence of an object in the path of the window 55. Know algorithms or other methods, for example, the methods described in U.S. Patent Number 6,456,027, assigned to Robert Bosch GmbH, can be used to indicate the presence of an object in the path of the window 55.

Fig. 3 illustrates an exemplary system 95, which includes a slidable or sliding door 100. The system 95 also includes a drive system 105, a partition monitoring system 110, and a controller 115. The sliding door 100 is implemented in a vehicle (not shown), for example, such as a van.

The sliding door 100 is driven open or closed using the drive system 105, similar to the embodiment shown in Fig 2. Alternatively or additionally, in one embodiment, a user can actuate a control button on a remote keyless entry ("RKE") fob (not shown) to move the sliding door 100 from an open position to a closed position, or vice versa, automatically. Consistent with Figs. 1 and 2, the monitoring system 110 is decoupled from the drive system 105, and monitors the speed, position, direction of travel, and/or acceleration of the vehicle door 100.

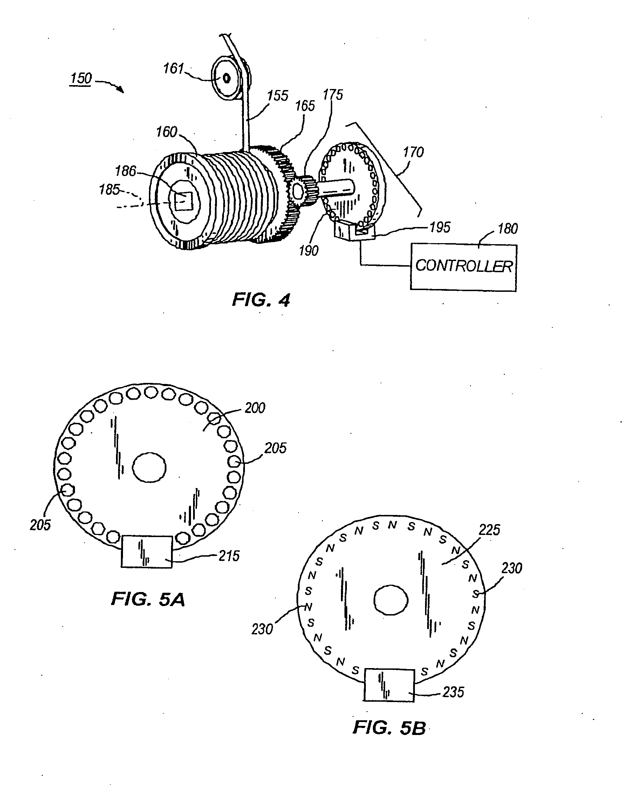

Fig. 4 illustrates an exemplary embodiment of a movable partition monitoring system 150, which can be used to monitor a partition (not shown). The monitoring system 150 generally includes a cable 155, a drum 160, a drum gear 165, a sensor assembly 170, and a sensor gear 175. In the embodiment shown in Fig. 4, the components of the partition monitoring system 150 are independent of, or decoupled from, a drive system, for example, that may be used to drive the partition. Additionally, the monitoring system 150 can include more components than those shown. For example, in one embodiment, other pulleys are included to support and route the cable 155 along a desirable path.

The cable 155 has two ends. In one embodiment, one of the ends is coupled to a movable partition (not shown), while the other end is coupled to the drum 160. An idler wheel 161 can be included between the movable partition and the drum 160, to route the cable 155 in a desirable path. The length of the cable 155 can be varied according to the application of the monitoring system 150, and is long enough to allow the partition to travel throughout its entire range of motion. The drum 160 is generally rotatable about a central axis 185, which allows the cable 155 to be wound around the drum 160 or unwound from the drum 160 as the end of the cable that is coupled to the movable partition moves. The diameter of the drum can also be varied according to the application. In some embodiments, the drum 160 includes an internal tensioner or spring (represented by block 186) or other suitable mechanism that provides a tensioning force for the cable 155. For example, the spring 186 provides the force required to wind the cable around the drum as the partition moves toward the drum. Additionally, a stopping device may be coupled to the cable 155 and the partition so that the tensioning force provided by the spring 186 is not completely alleviated.

In another embodiment, one end of the cable 155 is coupled to a stationary object (e.g., a door frame), while the other end of the cable is coupled to the drum 160. The drum 160, in turn, is coupled to the movable partition. Such an arrangement also allows the cable 155 to be unwound from, or wound around, the drum 160 as the partition moves.

As the cable 155 is unwound from, or wound around, the rotatable drum 160, the rotation of the drum 160 causes the drum gear 165 to turn. As a result, the sensor gear 175 that is mated with the drum gear 165 also turns. The rotation of the sensor gear 175 causes a disc 190 of the sensor assembly 170 to rotate. A sensing element 195 of the sensor assembly 170 monitors the motion of the disc 190, and transmits corresponding signals to a controller 180. The controller 180 determines the speed, position, direction of travel, and/or acceleration of the partition from the signals generated by the sensing element 195. For example, the speed of the partition is determined by monitoring the rate at which the disc 190 turns with respect to the sensing element 195. The acceleration of the partition is determined by monitoring a change in speed of the disc 190 over a certain period of time. The position of the partition is determined by monitoring the rotation of the disc 190 with respect to the sensing element 195 (as described in greater detail below). Additionally, the direction in which the partition is traveling is determined by monitoring the direction in which the disc 190 turns with respect to the sensing element 195 or, in other embodiments, multiple sensing elements, Other methods, as previously described, can also be used to determine the speed, position, direction of travel, and/or acceleration of the partition, as well as determine the presence of an obj ect in the path of the partition.

Fig. 5A illustrates one embodiment of the sensor assembly 170, which includes an aperture disc 200 having apertures 205, and one or more optical sensing elements 215. In the embodiment shown, one of the optical sensing elements 215 transmits a light beam (not shown) to an opposing sensing element 215. As the aperture disc 200 rotates, the light beam is interrupted by solid portions of the disc 200 (e.g., between the apertures 205). The reception (or lack thereof) of the light beam is used to determine the speed, position, direction of travel, and/or acceleration of the disc 200, and hence, the partition. For example, the position of the partition can be determined by monitoring the number of apertures that pass by the sensing elements 215. In other embodiments, the light beam is transmitted and received by the same sensing element, using an opposing element to reflect the light beam. In the embodiment shown in Fig. 5A, the resolution of the sensor assembly 170 is determined by the number of apertures in the disc 200, the gear ratio of the drum gear 165, the sensor gear 175, and the diameter of the drum 160, and the diameter of the aperture disc 200.

Fig. 5B illustrates another embodiment of the sensor assembly 170, which includes a magnetic disc or ring magnet 225 having poles 230, and one or more magnetic sensing elements 235 (e.g., Hall effect sensing elements). In the embodiment shown, the magnetic sensing elements 235 detect magnetic fields produced by the poles 230. As the magnetic disc 225 rotates, the magnetic fields alternate between a north pole and a south pole. The changing magnetic fields are used to determine the speed, position, direction of travel, and/or acceleration of the magnetic disc 225, and hence, the partition. In the embodiment shown in Fig. 5B, the resolution of the sensor is determined by the number of poles on the magnetic disc 225, the gear ratio between the drum gear 165 and the sensor gear 175, the diameter of the drum 160, and the diameter of the magnetic disc 225.

In other embodiments, the monitoring system 150 can employ other types of sensors to monitor the rotation of the drum 160. . Additionally, the components of the monitoring system 150 may be arranged differently. For example, in alternative embodiments, magnets and/or apertures can be directly incorporated or integrated into an end of the drum 160. As a result, Hall effect and/or optical sensors can monitor the rotation of the drum directly, and the drum gear 165 and sensor gear 175 can be eliminated from the system 150. Such a configuration can impact the resolution of the sensor. Accordingly, the specific implementation of the monitoring system 150 can depend on, among other things, the required resolution of the application at hand.

It is also to be appreciated that, at least in some embodiments, one or more of the components of a partition monitoring system may be included in, or shared with, a drive system of a partition. For example, in one embodiment, the partition monitoring system may use a pulley that is part of the partition drive system. In another embodiment, the partition monitoring system may be powered by a supply that is distributed to both the drive system and the monitoring system.

Various embodiments are set forth in the following claims.

## Claims

1. A system (10) for monitoring a movable partition (15) of a vehicle, the system comprising:
a drive system (20), suitable for being located within a door of the vehicle, and configured to move the movable partition (15);
a monitoring system (150) suitable for being located within the door and mechanically attached to the partition by means of an attachment element (155) for movement of the attachment element (155) together with the partition (15), the monitoring system (150) however being decoupled from the drive system (20), and the monitoring system (150) comprising a sensor configured to transmit a signal indicative of the motion of the partition (15);
a controller (30) configured to receive the transmitted signal, to calculate at least one of a speed, acceleration, position, and direction of movement of the movable partition (15) based upon the transmitted signal, and to generate an obstruction signal indicative of an obstruction in a path of the movable partition (15) based on the at least one of a speed, acceleration, position, and direction of movement of the movable partition (15) calculated by the controller (30) based upon the transmitted signal;
**characterized in that** the attachment element is a cable (155), located in use within the door, having a first end and a second end, the first end of the cable (155) configured to be coupled to the movable partition (15);
the monitoring system (150) also comprises a drum (160) configured to be coupled to the second end of the cable (155), wherein the drum (160) is independent of the drive system (20), and located in use within the vehicle door; and
said sensor is configured to transmit a signal indicature of the rotational motion of the drum (160).

2. The system (10) of claim 1, wherein the sensor comprises an aperture disc (190) and at least one optical sensing element (195).

3. The system (10) of claim 1, wherein the sensor comprises a ring magnet (225) and at least one magnetic sensing element (195).

4. The system (10) of claim 1, wherein the controller (30) is further configured to transmit, to the drive system (20), the obstruction signal indicative of an obstruction in the path of the movable partition (15).

5. The system (10) of claim 1, further comprising a stationary object positioned proximate to the movable partition (15), and wherein the drum (160) is coupled to the stationary object and the first end of the cable (155) is coupled to the movable partition (15).

6. The system (10) of claim 1, further comprising a stationary object proximate to the movable partition (15), the stationary object configured to be coupled to the first end of the cable (155), and the drum (160) configured to be coupled to the movable partition (15).

7. The system (10) of claim 1, wherein tension in the cable (155) is provided by a spring (186) positioned within the drum (160).

8. The system (10) of claim 1, further comprising at least one idler wheel (161) positioned between the first and second ends of the cable (155).

9. A method of monitoring a movable partition (15) in a vehicle door with a monitoring system (150) according to claim 1, the method comprising:
providing a sensor (170) configured to be independent of a drive system (20) for the movable partition (15) within the vehicle door;
linking the monitoring system (150) and the movable partition (15) via an attachment element (155) within the vehicle door, the monitoring system (150) however being decoupled from the drive system (20);
moving the attachment element (155) together with the partition (15);
generating, with the sensor (170) within the vehicle door, a first signal indicative of motion of the partition (15);
receiving, by a controller (30), the first signal;
generating, via the controller (30), a second signal using data from the first signal, the second signal indicative of at least one of a speed, a position, a direction of travel, and an acceleration of the movable partition (15);
generating a third signal indicative of an obstruction in a path of the movable partition (15) using the second signal;
**characterized in that** the method further comprises providing a cable (155) as the attachment element, located within the door, having a first end and a second end, the first end of the cable (155) configured to be coupled to the movable partition (15);
providing a drum (160) configured to be coupled to the second end of the cable (155), wherein the drum (160) is independent of the drive system (20), and located within the vehicle door; and **in that** said sensor is configured to transmit a signal indicative of the rotational motion of the drum (160).

10. The method of claim 9, further comprising generating a fourth signal via the controller (30), the fourth signal including control information to reverse a direction of travel of the movable partition (15).

11. The method of claim 9, wherein generating, with the sensor (170), a first signal indicative of motion of the partition (15) includes generating a signal indicative of rotational motion of the rotatable drum (160).

12. The method of claim 9, wherein generating the first signal comprises sensing at least one of speed, direction, position, and acceleration of an aperture disc (190) coupled to the drum (160) using an optical sensing element (195).

13. The method of claim 9, wherein generating the first signal comprises sensing at least one of speed, direction, position, and acceleration of a ring magnet (225) coupled to the drum (160) using a magnetic sensing element (235).

## Patentansprüche

1. System (10) zum Überwachen einer beweglichen Trennwand (15) eines Fahrzeugs, wobei das System umfasst:
ein Antriebssystem (20), das geeignet ist, um innerhalb einer Tür des Fahrzeugs angeordnet zu sein, und das konfiguriert ist, um die bewegliche Trennwand (15) zu bewegen;
ein Überwachungssystem (150), das geeignet ist, um innerhalb einer Tür des Fahrzeugs angeordnet zu sein, und das mechanisch an der Trennwand mit Hilfe eines Befestigungselements (155) zum Bewegen des Befestigungselements (155) zusammen mit der Trennwand (15) befestigt ist, wobei das Überwachungssystem (150) jedoch vom Antriebssystem (20) entkoppelt ist und das Überwachungssystem (150) einen Sensor umfasst, der konfiguriert ist, um ein Signal, das die Bewegung der Trennwand (15) anzeigt, zu übertragen;
eine Steuereinheit (30), die konfiguriert ist, um das übertragene Signal zu empfangen, Geschwindigkeit und/oder Beschleunigung und/oder Position und/oder Bewegungsrichtung der beweglichen Trennwand (15) auf der Grundlage des übertragenen Signals zu berechnen und ein Hindernissignal auf der Grundlage der Geschwindigkeit und/oder Beschleunigung und/oder Position und/oder Bewegungsrichtung der beweglichen Trennwand (15), die von der Steuereinheit (30) auf der Grundlage des übertragenen Signals berechnet wurden, zu erzeugen, das ein Hindernis in einem Weg der beweglichen Trennwand (15) anzeigt;
**dadurch gekennzeichnet, dass** das Befestigungselement ein zur Verwendung innerhalb der Tür angeordnetes Seil (155) ist, das ein erstes Ende und ein zweites Ende aufweist, wobei das erste Ende des Seils (155) konfiguriert ist, um mit der beweglichen Trennwand (15) verbunden zu werden;
das Überwachungssystem (150) auch eine Trommel (160) umfasst, die konfiguriert ist, um mit dem zweiten Ende des Seils (155) verbunden zu werden, wobei die Trommel (160) vom Antriebssystem (20) unabhängig ist und bei Benutzung innerhalb der Fahrzeugtür angeordnet ist; und
der Sensor konfiguriert ist, um ein Signal zu übertragen, das die Drehbewegung der Trommel (160) anzeigt.

2. System (10) nach Anspruch 1, wobei der Sensor eine Lochscheibe (190) und wenigstens einen optischen Messfühler (195) umfasst.

3. System (10) nach Anspruch 1, wobei der Sensor einen Ringmagneten (225) und wenigstens einen magnetischen Messfühler (195) umfasst.

4. System (10) nach Anspruch 1, wobei die Steuereinheit (30) ferner konfiguriert ist, um ein Hindernissignal zum Antriebssystem (20) zu übertragen, wobei das Hindernissignal ein Hindernis im Weg der beweglichen Trennwand (15) anzeigt.

5. System (10) nach Anspruch 1, das ferner ein unbewegliches Objekt umfasst, das in der Nähe der beweglichen Trennwand (15) positioniert ist, und wobei die Trommel (160) mit dem unbeweglichen Objekt verbunden ist und das erste Ende des Seils (155) mit der beweglichen Trennwand (15) verbunden ist.

6. System (10) nach Anspruch 1, das ferner ein unbewegliches Objekt in der Nähe der beweglichen Trennwand (15) umfasst, wobei das unbewegliche Objekt konfiguriert ist, um mit dem ersten Ende des Seils (155) verbunden zu werden, und die Trommel (160) konfiguriert ist, um mit der beweglichen Trennwand (15) verbunden zu werden.

7. System (10) nach Anspruch 1, wobei die Spannung im Seil (155) durch eine Feder (186) erzeugt wird, die innerhalb der Trommel (160) positioniert ist.

8. System (10) nach Anspruch 1, das ferner wenigstens ein Zwischenrad (161) umfasst, das zwischen dem ersten und dem zweiten Ende des Seils (155) positioniert ist.

9. Verfahren zum Überwachen einer beweglichen Trennwand (15) in einer Fahrzeugtür mit einem Überwachungssystem (150) nach Anspruch 1, wobei das Verfahren umfasst:
Bereitstellen eines Sensors (170), der konfiguriert ist, um von einem Antriebssystem (20) für die bewegliche Trennwand (15) innerhalb der Fahrzeugtür unabhängig zu sein;
Verbinden des Überwachungssystems (150) und der beweglichen Trennwand (15) über ein Befestigungselement (155) innerhalb der Fahrzeugtür, wobei das Überwachungssystem (150) jedoch vom Antriebssystem (20) entkoppelt ist;
Bewegen des Befestigungselements (155) zusammen mit der Trennwand (15);
Erzeugen mit dem Sensor (170) innerhalb der Fahrzeugtür eines ersten Signals, das die Bewegung der Trennwand (15) anzeigt;
Empfangen durch eine Steuereinheit (30) des ersten Signals;
Erzeugen über die Steuereinheit (30) eines zweiten Signals unter Verwendung von Daten aus dem ersten Signal, wobei das zweite Signal eine Geschwindigkeit und/oder eine Position und/oder eine Bewegungsrichtung und/oder eine Beschleunigung der beweglichen Trennwand (15) anzeigt;
Erzeugen eines dritten Signals, das ein Hindernis in einem Weg der beweglichen Trennwand (15) anzeigt, unter Verwendung des zweiten Signals;
**dadurch gekennzeichnet, dass** das Verfahren ferner das Bereitstellen eines Seils (155) als Befestigungselement umfasst, das innerhalb der Tür angeordnet ist und das ein erstes und ein zweites Ende aufweist, wobei das erste Ende des Seils (155) konfiguriert ist, um mit der beweglichen Trennwand (15) verbunden zu werden;
das Bereitstellen einer Trommel (160) umfasst, die konfiguriert ist, um mit dem zweiten Ende des Seils (155) verbunden zu werden, wobei die Trommel (160) unabhängig vom Antriebssystem (20) ist und innerhalb der Fahrzeugtür angeordnet ist; und
dass der Sensor konfiguriert ist, um ein Signal zu übertragen, das die Drehbewegung der Trommel (160) anzeigt.

10. Verfahren nach Anspruch 9, das ferner das Erzeugen eines vierten Signals über die Steuereinheit (30) umfasst, wobei das vierte Signal Steuerinformationen umfasst, um eine Bewegungsrichtung der beweglichen Trennwand (15) umzukehren.

11. Verfahren nach Anspruch 9, wobei das Erzeugen mit dem Sensor (170) eines ersten Signals, das die Bewegung der Trennwand (15) anzeigt, das Erzeugen eines Signals umfasst, das die Drehbewegung der drehbaren Trommel (160) anzeigt.

12. Verfahren nach Anspruch 9, wobei das Erzeugen des ersten Signals das Abfühlen der Geschwindigkeit und/oder der Richtung und/oder der Position und/oder der Beschleunigung einer Lochscheibe (190), die mit der Trommel (160) verbunden ist, unter Verwendung eines optischen Messfühlers (195) umfasst.

13. Verfahren nach Anspruch 9, wobei das Erzeugen des ersten Signals das Abfühlen der Geschwindigkeit und/oder der Richtung und/oder der Position und/oder der Beschleunigung eines Ringmagneten (255), der mit der Trommel (160) verbunden ist, unter Verwendung eines magnetischen Messfühlers (195) umfasst.

## Revendications

1. Système (10) de commande d'une cloison mobile (15) de véhicule, comprenant
- un système d'entraînement (20) destiné à être installé dans une portière de véhicule pour déplacer la cloison mobile (15),
- un système de commande (150) destiné à être logé dans la portière et à être relié mécaniquement à la cloison par l'intermédiaire d'un élément de fixation (155) pour déplacer l'élément de fixation (155) avec la cloison (15), le système de commande (150) étant toutefois découplé du système d'entraînement (20) et le système de commande (150) comporte un capteur transmettant un signal indiquant le mouvement de la cloison (15)
- un contrôleur (30) recevant le signal transmis pour calculer au moins la vitesse ou l'accélération ou la position ou le sens de déplacement de la cloison mobile (15) en fonction du signal transmis et générer un signal d'obstruction indiquant qu'il y a une obstruction dans le chemin de la cloison mobile (15) en se fondant au moins sur la vitesse ou l'accélération ou la position ou le sens de mouvement de la cloison mobile (15) calculée par le contrôleur (30) en fonction du signal transmis,
système **caractérisé en ce que** l'élément de fixation est un câble (155) placé dans la portière et ayant une première et une seconde extrémité, la première extrémité du câble (155) étant destinée à être couplée à la cloison mobile (15),
système de contrôle (150) comportant également un tambour (160) destiné à recevoir la seconde extrémité du câble (155), le tambour (160) indépendant du système d'entraînement (20) étant destiné à être installé dans la portière du véhicule et
- le capteur transmet un signal indiquant le mouvement de rotation du tambour (160).

2. Système (10) selon la revendication 1
**caractérisé en ce que**
le capteur comporte un disque à orifices (190) et au moins un élément de détection optique (195).

3. Système (10) selon la revendication 1
**caractérisé en ce que**
le capteur comporte un aimant annulaire (225) et au moins un élément de détection magnétique (195).

4. Système (10) selon la revendication 1
**caractérisé en ce que**
le contrôleur (30) est, en outre, configuré pour transmettre au système d'entraînement (20) le signal d'obstruction indiquant qu'il y a une obstruction dans le chemin de la cloison mobile (15).

5. Système (10) selon la revendication 1
**caractérisé en ce qu'**
il comporte, en outre, un objet fixe positionné à proximité de la cloison mobile (15) et le tambour (160) est couplé à l'objet fixe et la première extrémité du câble (155) est couplée à la cloison mobile (15).

6. Système (10) selon la revendication 1
**caractérisé en ce qu'**
il comporte, en outre, un objet fixe à proximité de la cloison mobile (15), l'objet fixe étant destiné à être couplé à la première extrémité du câble (155) et le tambour (160) étant configuré pour être couplé à la cloison mobile (15).

7. Système (10) selon la revendication 1
**caractérisé en ce que**
la tension du câble (155) est assurée par un ressort (186) placé dans le tambour (160).

8. Système (10) selon la revendication 1
**caractérisé en ce qu'**
il comporte, en outre, au moins une roue libre (161) entre la première et la seconde extrémité du câble (155).

9. Procédé de commande d'une cloison mobile (15) dans une potière de véhicule à l'aide d'un système de commande (150) selon la revendication 1, procédé comprenant les étapes suivantes consistant à :
- fournir un capteur (170) configuré pour être indépendant d'un système d'entraînement (20) de la cloison mobile (15) dans la portière de véhicule,
- relier le système de contrôle (150) et la cloison mobile (15) par l'élément de fixation (155) dans la portière du véhicule, le système de commande (150) étant toutefois découplé du système d'entraînement (20),
- déplacer l'élément de fixation (155) avec la cloison (15),
- générer avec le capteur (170) dans la portière du véhicule, un premier signal indiquant le mouvement de la cloison (15),
- recevoir le premier signal par un contrôleur (30),
- générer, par le contrôleur (30), un second signal en utilisant les données du premier signal, le second signal indiquant au moins une vitesse, ou une position ou un sens de déplacement ou une accélération de la cloison mobile (15),
- générer un troisième signal indiquant une obstruction dans le chemin de la cloison mobile (15) en utilisant le second signal,
procédé **caractérisé en ce qu'**
il comporte, en outre, l'étape suivante consistant à :
- fournir un câble (155) comme élément de fixation, logé dans la portière et ayant une première et une seconde extrémité, la première extrémité du câble (155) étant destinée à être couplée à la cloison mobile (15)
- fournir un tambour (160) configuré pour être couplé à la seconde extrémité du câble (155), le tambour (160) indépendant du système d'entraînement (20) étant logé dans la portière du véhicule et
- le capteur est configuré pour transmettre un signal indiquant le mouvement de rotation du tambour (160).

10. Procédé selon la revendication 9
**caractérisé en ce qu'**
le contrôle (30) génère un quatrième signal comportant une information de commande pour inverser le sens de déplacement de la cloison mobile (15).

11. Procédé selon la revendication 9,
**caractérisé en ce qu'**
avec le capteur (170), on génère un premier signal indiquant le mouvement de la cloison (15) et consistant à générer un signal indiquant le mouvement de rotation du tambour mobile (160).

12. Procédé selon la revendication 9,
**caractérisé en ce que**
générer le premier signal consiste à détecter au moins la vitesse, la direction ou la position ou l'accélération d'un disque à orifices (190) couplé au tambour (160) avec un élément de détection optique (195).

13. Procédé selon la revendication 9,
**caractérisé en ce que**
générer le premier signal consiste à détecter au moins la vitesse ou la direction ou la position ou l'accélération d'un aimant annulaire (225) couplé au tambour (160) en utilisant un élément de détection magnétique (235).
